# FASCICULE DE BREVET EUROPEEN

(11) **EP 1 753 949 B1**
(45) Date de publication et mention de la délivrance du brevet: **30.07.2008**
(21) Numéro de dépôt: 05766709.9
(22) Date de dépôt: 30.05.2005
(51) Int. Cl.: F02D 41/02

(54) **PROCEDE ET DISPOSITIF DE COMMANDE D'UNE TRANSMISSION AUTOMATISEE POUR UN VEHICULE AUTOMOBILE**
VERFAHREN UND VORRICHTUNG ZUR STEUERUNG DES AUTOMATIKGETRIEBES EINES KRAFTFAHRZEUGS
METHOD AND DEVICE FOR CONTROLLING AN AUTOMATIC TRANSMISSION FOR A MOTOR VEHICLE

(30) Priorité: 28.05.2004 FR 0405803
(43) Date de publication de la demande: 21.02.2007
(73) Titulaire: Renault Technocentre, 78288 Guyancourt (FR)
(72) Inventeur: ROUDEAU, Frédéric, F-94400 Vitry Sur Seine (FR); TURPIN, Thomas, F-91400 Orsay (FR)
(86) Numéro de dépôt international: PCT/FR2005/050387
(87) Numéro de publication internationale: WO 2005/119035

(56) Documents cités:
- EP-A- 0 676 566
- DE-A- 19 625 936
- DE-A- 19 962 963
- FR-A- 2 827 339
- US-A1- 2003 047 164
- US-B1- 6 671 602

## Description

La présente invention concerne le contrôle du mode de fonctionnement d'un groupe motopropulseur équipé d'une transmission automatisée d'un véhicule automobile.

Les transmissions automatisées concernent notamment les Boîtes à Commande Impulsionnelle dites BCI.

Une transmission comporte classiquement un bloc de commande recevant un ou plusieurs paramètres d'entrée interprétant entre autres la volonté du conducteur. Puis, en fonction de la valeur de ces paramètres, ce bloc de commande délivre une consigne de commande en vue d'une application aux roues du véhicule automobile.

Aussi, on a déjà décrit dans le document FR-A-2827339, au nom de la Demanderesse, un dispositif de contrôle du point de fonctionnement d'un groupe motopropulseur destiné à un véhicule automobile. Ce dispositif possède notamment un module d'interprétation de la volonté du conducteur appelé module IVC. Ledit module génère des consignes de couple destiné aux roues du véhicule automobile, qui sont ensuite converties en consigne de régime de fonctionnement et de commande du groupe moto-propulseur par un bloc d'optimisation du point de fonctionnement dit module OPF. On détermine cette consigne de couple en fonction de la volonté du conducteur, des caractéristiques du véhicule automobile et de son environnement.

Cependant, au sein d'un véhicule automobile comprenant une transmission automatisée, le conducteur peut avoir à choisir entre deux modes de conduite différents : le mode automatique et le mode manuel avec commande impulsionnelle.

Dans le cas d'une commande impulsionnelle, le conducteur peut changer les rapports de vitesse en sollicitant le levier de commande du véhicule automobile pour actionner les commandes (+) et (-), générant respectivement des impulsions positives ou négatives.

Le document US 6 671 602 décrit un contrôle en mode automatique ou manuel avec commande impulsionnelle dans une voiture avec une transmission continue variable. La vitesse de consigne du moteur est ajustée dans chacun des modes en fonction de la vitesse du véhicule, le rapport de transmission, la demande du conducteur et dans certaines conditions.

Le module d'optimisation du point de fonctionnement OPF du document FR-A-2827339 ne prend pas en compte le mode de fonctionnement manuel, mais traite seulement le cas du mode automatique.

La présente invention a pour but de pallier ce manque afin de pouvoir adapter le dispositif de contrôle du mode de fonctionnement aux différents modes de conduite dont le mode automatique et le mode manuel avec commande impulsionnelle. L'invention a également pour but de permettre le passage d'un mode de conduite à un autre.

À cet effet, l'invention propose un procédé de commande d'une transmission automatisée d'un groupe motopropulseur pour véhicule automobile. Le procédé comprend une étape de délivrance d'une consigne de régime de fonctionnement et de commande du groupe moto-propulseur de manière à atteindre la consigne de régime moteur. La consigne est élaborée en fonction d'un couple aux roues adapté à la volonté du conducteur et de données d'entrées représentatives des caractéristiques du véhicule automobile, de la volonté du conducteur et de l'environnement du véhicule automobile. On adapte la consigne en fonction d'un mode de conduite sélectionné parmi au moins deux modes de conduite distincts qui comprennent un mode automatique et un mode manuel avec commande impulsionnelle.

Ce deuxième module, adapté au mode de conduite manuel avec commande impulsionnelle, permet de générer une consigne de régime de fonctionnement et de commande du groupe moto-propulseur, adaptée à un deuxième mode de conduite outre le mode de conduite automatique.

De préférence, on sélectionne le mode manuel avec commande impulsionnelle en fonction de la valeur d'un signal de consigne d'un moyen de commande de vitesse du véhicule automobile après un traitement dudit signal de consigne.

La génération d'une consigne de régime de fonctionnement et de commande du groupe moto-propulseur dans le cas du mode manuel avec commande impulsionnelle peut consister à :
- déterminer la consigne de rapport en mode manuel avec commande impulsionnelle en fonction d'une première liste de paramètres d'entrée prédéterminés,
- traduire ladite consigne de rapport en consigne de régime de fonctionnement et de commande du groupe moto-propulseur en fonction d'une seconde liste de paramètres d'entrée prédéterminés.

Dans un mode de mise en oeuvre, la première liste de paramètres d'entrée pour déterminer une consigne de rapport en mode manuel avec commande impulsionnelle comprend par exemple : l'enfoncement de la pédale d'accélération du véhicule automobile et la position du moyen de commande de vitesse du véhicule automobile.

Dans un mode de mise en oeuvre, la consigne de régime de fonctionnement et de commande du groupe muto-propulseur en mode manuel avec commande impulsionnelle est saturée par des consignes de régime moteur minimale et maximale.

De préférence, la consigne de régime de fonctionnement et de commande du groupe moto-propulseur en mode manuel avec commande impulsionnelle est limitée à des valeurs calibrées par l'utilisation d'un filtre de lissage.

L'invention a également pour objet un dispositif de commande d'une transmission automatisée d'un groupe motopropulseur pour véhicule automobile, apte à élaborer une consigne de régime de fonctionnement et de commande du groupe moto-propulseur de manière à atteindre la consigne de régime moteur, en fonction d'un couple aux roues adapté à la volonté du conducteur. Le dispositif comprend par exemple :
- un bloc d'entrée délivrant des données d'entrée représentatives de la volonté du conducteur et de l'environnement du véhicule automobile,
- un bloc de commande comprenant au moins deux modules respectivement adaptés à deux modes de conduite distincts, un mode automatique et un mode manuel avec commande impulsionnelle, chacun des modules étant apte à élaborer une consigne régime de fonctionnement et de commande du groupe moto-propulseur de manière à atteindre la consigne de régime moteur, en tenant compte des données d'entrée délivrées par le bloc d'entrée,
- un module de traitement des signaux délivrés par le moyen de commande de vitesse du véhicule automobile,
- un module de sélection recevant des signaux provenant dudit module de traitement des signaux du moyen de commande de vitesse du véhicule automobile et étant apte à délivrer un signal de sélection d'un module de mode de conduite en fonction de ces signaux.

Le module correspondant à une conduite en mode manuel avec commande impulsionnelle comporte avantageusement :
- un bloc de détermination d'une consigne de rapport manuel avec commande impulsionnelle,
- un bloc de traduction de ladite consigne de rapport manuel avec commande impulsionnelle en consigne de régime de fonctionnement et de commande du groupe moto-propulseur.

D'autres avantages et caractéristiques de l'invention apparaîtront à l'examen de la description détaillée d'un mode de mise en oeuvre de l'invention nullement limitatif, et des dessins annexés, sur lesquels :
- la figure 1 est un schéma synoptique d'un exemple d'un mode de réalisation du dispositif qui permet de sélectionner un mode manuel ou automatique selon l'invention,
- la figure 2 illustre schématiquement et plus en détail une partie du bloc d'entrée de la figure 1,
- la figure 3 illustre schématiquement et plus en détail une autre partie du bloc d'entrée de la figure 1,
- la figure 4 illustre schématiquement et plus en détail une partie du bloc de commande de la figure 1,
- la figure 5 illustre schématiquement et plus en détail une autre partie du bloc de commande de la figure 1,
- la figure 6 illustre schématiquement et plus en détail un exemple d'un module de mode manuel de la figure 1.

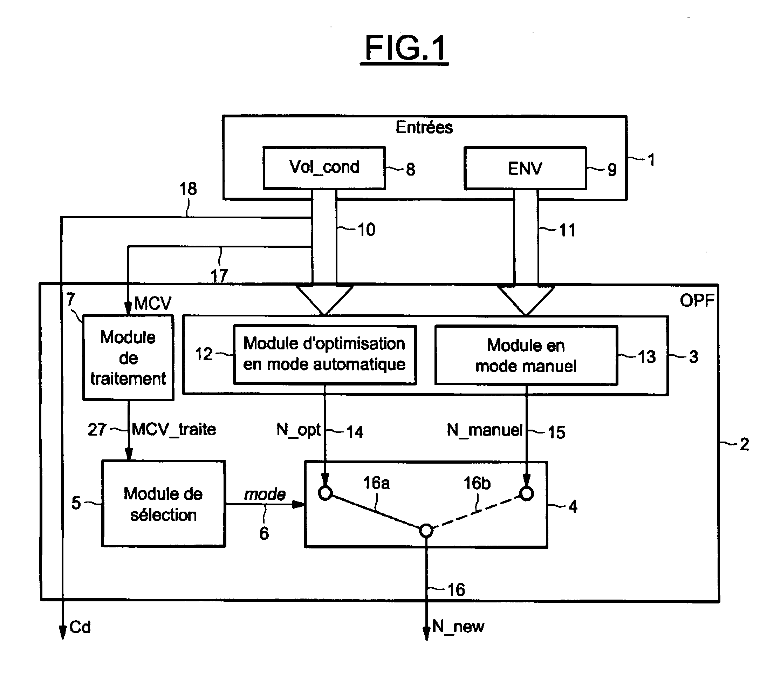

Sur la figure 1, on a représenté schématiquement un exemple d'un mode de réalisation du dispositif selon l'invention.

Ce dispositif peut être inclus dans une boîte de commande pour une transmission automatisée de véhicule automobile, non représentée sur la figure 1.

Tel qu'il est représenté sur la figure 1, le dispositif de commande comprend un bloc d'entrée 1 transmettant des données d'entrée à un bloc d'optimisation du point de fonctionnement OPF 2. Le bloc d'entrée 1 délivre différents types de données d'entrée qui seront décrites en détail ci-après.

Le bloc OPF 2 comprend notamment un bloc de commande 3 qui délivre différentes consignes de régime de fonctionnement et de commande du groupe moto-propulseur, selon le mode de conduite utilisé par le conducteur. Le bloc de commande 3 délivre ces consignes aux bornes d'entrée d'un sélecteur 4 compris également dans le bloc OPF 2.

Un module de sélection 5, compris dans le bloc OPF 2, envoie au sélecteur 4 un signal de sélection « *mode* » d'une consigne, par l'intermédiaire d'une connexion 6. Le signal de sélection « *mode* » est déterminé en fonction d'un signal issu d'un module de traitement 7, compris également dans le bloc OPF 2. Le module de traitement 7 reçoit du bloc d'entrée 1 un signal par une connexion 17 reliant le bloc d'entrée 1 au module de traitement 7. Ce signal transitant par la connexion 17 interprète une consigne d'un moyen de commande de vitesse MCV du véhicule automobile. Le moyen MCV d'un véhicule automobile peut être par exemple un levier de vitesse ou des palettes situées au niveau du volant du véhicule automobile. Le module de traitement 7 élabore alors un signal MCV_traité transmis par l'intermédiaire d'une connexion 27 au module de sélection 5 pour que celui-ci détermine le signal de sélection « *mode* ».

Le bloc d'entrée 1 comporte deux modules 8 et 9 qui sont aptes à élaborer un signal de données à partir des signaux issus de capteurs non représentés et intégrés au véhicule automobile.

Ces deux modules 8 et 9 communiquent avec le bloc de commande 3 du module OPF 2 et délivrent des données d'entrée par l'intermédiaire des deux connexions distinctes, respectivement 10 et 11 à ce bloc 3. Le bloc de commande 3 comprend deux modules associés à deux modes de conduite, le module 12 pour le mode automatique et le module 13 pour le mode manuel. Ces deux modules sont aptes à délivrer chacun à des entrées respectives du sélecteur 4, une consigne optimisée N_opt de régime de fonctionnement et de commande du groupe moto-propulseur en mode automatique d'une part et manuelle avec commande impulsionnelle N_manuel d'autre part. En sortie, le sélecteur 4 délivre une consigne de régime de fonctionnement et de commande du moteur thermique du groupe moto-propulseur N_new, de manière à atteindre la consigne de régime moteur. Cette consigne N_new est transmise par une connexion 16.

En outre, le bloc d'entrée 1 délivre directement en sortie du bloc d'optimisation du point de fonctionnement OPF 2 la composante dynamique de la consigne de couple Cd par une connexion 18.

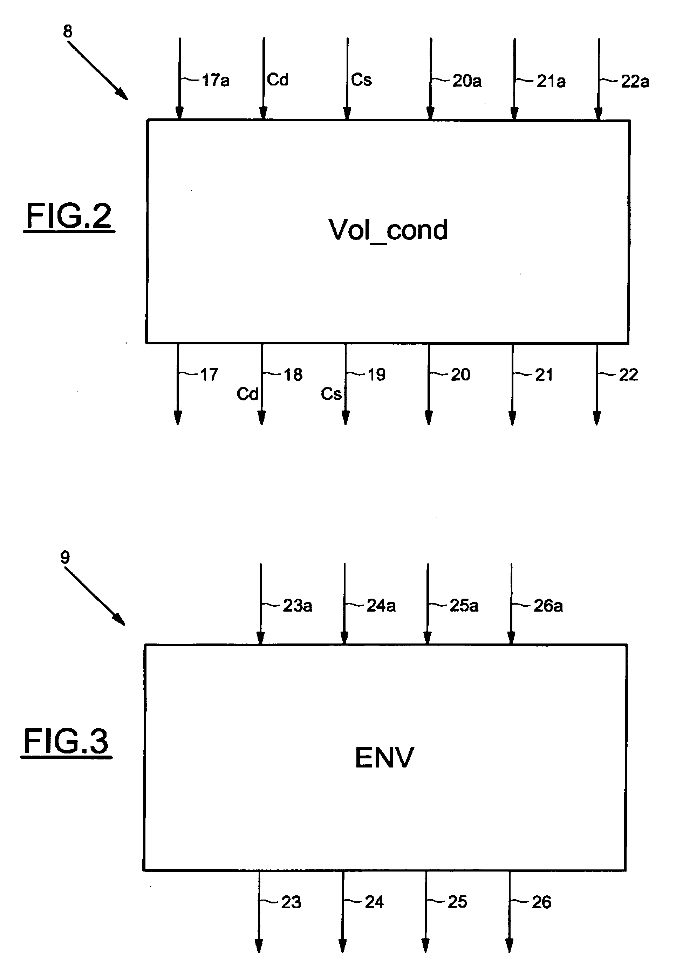

Plus précisément, le premier module 8 du bloc d'entrée 1 est capable d'élaborer des paramètres d'entrée représentatifs des souhaits du conducteur Vol_Cond. En se référant à la figure 2 qui décrit les données élaborées par le module 8, on note qu'il comprend différentes entrées auxquelles correspondent différentes sorties. Parmi ces sorties se trouvent un signal transitant par la connexion 17 et correspondant au moyen MCV du véhicule automobile, un signal transitant par la connexion 18, correspondant à la composante Cd , un signal transitant par la connexion 19 et correspondant à la composante statique du couple Cs. Ces deux composantes dynamique et statique sont issues d'un module interprétant la volonté du conducteur, par exemple le module IVC, décrit dans le document FR-A-2827339 et non représenté sur la figure. Le module IVC délivre, entre autres, les composantes dynamique et statique d'une consigne de couple destinées aux roues du véhicule automobile. Cette consigne de couple est évaluée en fonction de différents paramètres représentatifs des caractéristiques du véhicule automobile, de la volonté du conducteur et de l'environnement du véhicule automobile, ces paramètres étant propres au module IVC.

Un autre exemple de paramètres délivrés par le module 8 peut être un signal 20 correspondant aux limitations de variations de régime moteur 20a. La limitation de variation de régime moteur définit la variation maximale de régime moteur pendant un intervalle de temps déterminé. En outre, la limitation de variations de régime moteur comprend deux composantes, non représentées sur la figure :
- une composante de signal de limitation des variations de régime moteur pour limiter les variations de régime moteur vers le sens de la réduction,
- une composante de signal de limitation des variations de régime moteur pour limiter les variations de régime moteur vers le sens de l'augmentation.

D'autres exemples de paramètres délivrés par le module 8 peuvent être un signal transitant par la connexion 21 correspondant à la position de la pédale d'accélérateur 21a ou encore un signal transitant par la connexion 22 correspondant à la sportivité du conducteur 22a.

Par ailleurs, le second module 9 est capable d'élaborer des paramètres d'entrée représentatifs de l'environnement du véhicule automobile. Ces derniers permettent de tenir compte de l'état du véhicule automobile et de sa situation dans l'environnement. En se référant à la figure 3 qui décrit plus précisément les données élaborées par le module 9, on note qu'il comprend différentes entrées auxquelles correspondent différentes sorties. Parmi ces sorties se trouvent un signal transitant par la connexion 23 correspondant à la vitesse du véhicule automobile 23a, un signal transitant par la connexion 24 correspondant à la limitation supérieure 24a du régime moteur, un signal transitant par la connexion 25 correspondant à la limitation inférieure 25a du régime moteur et un signal transitant par la connexion 26 correspondant au régime moteur du cycle précédent 26a.

La valeur des paramètres et l'état des variables de ces données d'entrée sont stockés dans une mémoire commune à chaque élément du dispositif, non représentée.

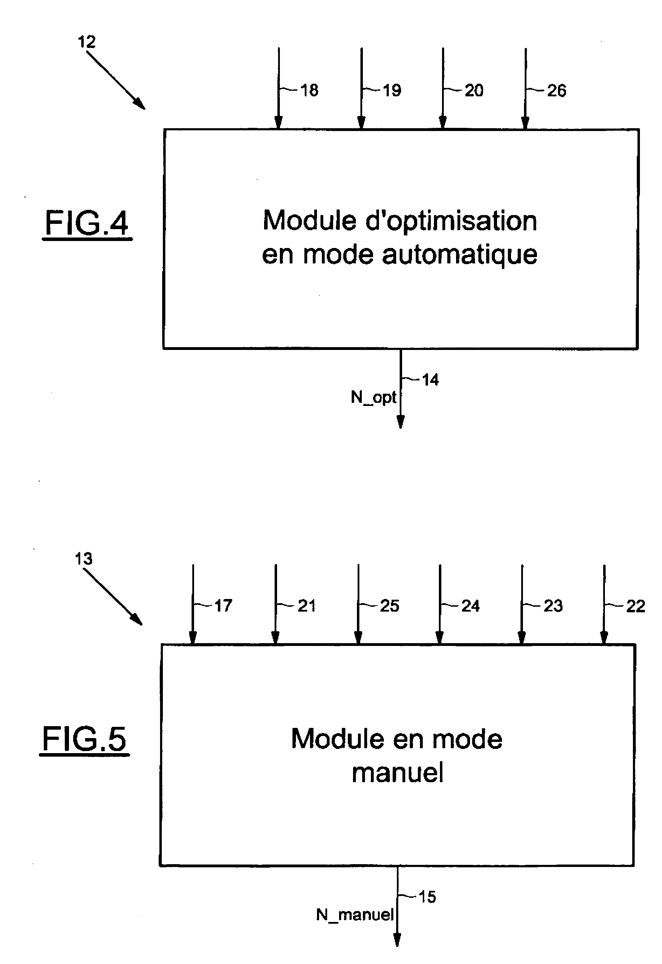

Selon les valeurs des paramètres d'entrée, un premier mode choisi par le module de sélection 5 peut être le mode d'optimisation en mode automatique. Le processus d'élaboration de la consigne N_opt peut alors être celui décrit dans le document FR-A-2827339. Ce processus se fait en fonction des données transmises par la connexion 10 qui sont décrites plus en détail sur la figure 4. Ces données peuvent être un signal transitant par la connexion 18 correspondant à la composante Cd, un signal transitant par la connexion 19 correspondant à la composante Cs, un signal transitant par la connexion 20 correspondant aux limitations de variation de régime moteur ou encore un signal transitant par la connexion 26 correspondant à la consigne de régime moteur pour le cycle précédent. Dans cet exemple où le mode d'optimisation en mode automatique est choisi par le module de sélection 5, une consigne N_opt, est transmise à une première borne d'entrée du sélecteur 4 par la connexion 14. Le sélecteur 4 sélectionne sa première borne d'entrée en établissant une connexion 16a avec sa borne de sortie. Le sélecteur 4 peut alors délivrer une consigne N_new. Dans ce cas, la consigne N_new correspond à la consigne N_opt.

Selon les valeurs des paramètres d'entrée, un second mode choisi par le module de sélection 5 peut être le mode manuel avec commande impulsionnelle. Ce processus se fait en fonction des données transmises par la connexion 11 qui sont décrites plus en détail sur la figure 5. Ces données peuvent être un signal transitant par la connexion 17 correspondant au moyen de commande de vitesse du véhicule automobile, un signal transitant par la connexion 21 correspondant à la position de la pédale d'accélération, un signal transitant par la connexion 22 correspondant à la sportivité du conducteur, un signal transitant par la connexion 23 correspondant à la vitesse du véhicule automobile ou encore des signaux transitant respectivement par les connexions 24 et 25 correspondant aux limitations supérieure et inférieure du régime moteur. Dans cet exemple où le mode manuel est choisi par le module de sélection 5, une consigne N_manuel, est transmise à une seconde borne d'entrée du sélecteur 4 par la connexion 15. Le sélecteur 4 établit une connexion 16b entre sa borne d'entrée et sa borne de sortie. Le sélecteur 4 peut alors délivrer une consigne N_new. La consigne N_new correspond alors à la consigne N_manuel.

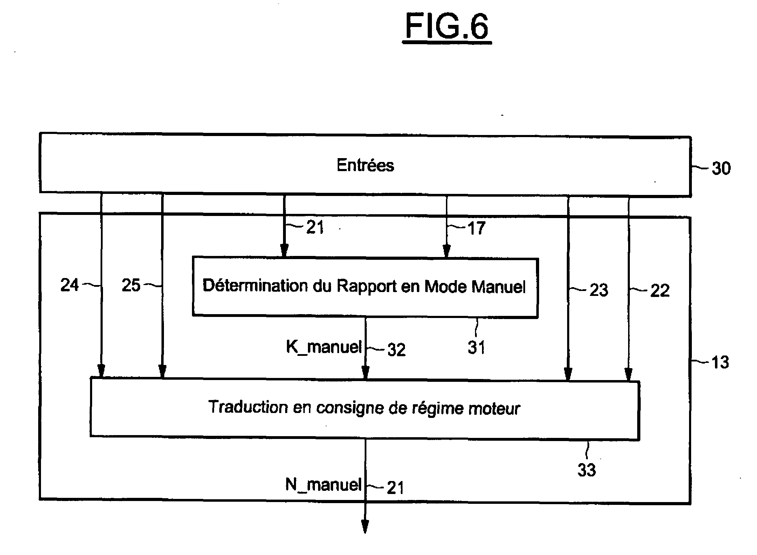

La figure 6 présente un mode de réalisation du module 13 de mode manuel avec commande impulsionnelle.

Selon ce mode de réalisation, le module 13 comporte également un bloc d'entrée 30 propre au mode manuel. Le bloc d'entrée 30 transmet les données d'entrée représentées sur la figure 5, c'est-à-dire le signal transitant par la connexion 17 correspondant au moyen de commande de vitesse du véhicule automobile, le signal transitant par la connexion 21 correspondant à la position de la pédale d'accélération, le signal transitant par la connexion 22 correspondant à la sportivité du conducteur, le signal transitant par la connexion 23 correspondant à la vitesse du véhicule automobile et les signaux transitant par les connexions 24 et 25 correspondant aux limitations supérieure et inférieure du régime moteur. Ces données sont transmises au module 13 de mode manuel avec commande impulsionnelle. Celui-ci comprend deux blocs distincts qui sont un premier module 31 de détermination du rapport en mode manuel et un second 33 module de traduction en consigne de régime moteur. Le premier module 31 reçoit en entrée un signal transitant par la connexion 21 correspondant à la position de la pédale d'accélération et un signal transitant par la connexion 17 correspondant au moyen MCV véhicule automobile. Le module élabore alors la consigne de rapport de vitesse K_manuel qu'il transmet par une connexion 32 au second module 33 de traduction en consigne de régime moteur. Ce second module reçoit en entrée outre la consigne de rapport de vitesse K_manuel, un signal transitant par la connexion 22 correspondant à la sportivité du conducteur, un signal transitant par la connexion 23 correspondant à la vitesse du véhicule automobile, des signaux transitant par les connexions 24 et 25 correspondant aux limitations supérieure et inférieure du régime moteur ou encore un signal transitant par la connexion 23 correspondant à la vitesse du véhicule automobile. Le second module 33 élabore une consigne N_manuel qu'il transmet au sélecteur 4 par la connexion 15.

Le mode de fonctionnement du module de mode manuel avec commande impulsionnelle est le suivant.

Une première étape consiste à déterminer une consigne de rapport de vitesse K_manuel en tenant compte des impulsions (+) et (-) générées par le moyen MCV du véhicule automobile. On peut calculer cette consigne de rapport de vitesse K_manuel en tenant compte de la position de la pédale d'accélération dans le cas de la gestion d'une fonction de rétrogradage automatique dite « kick-down ». Cette fonction « kick-down » entraîne le rétrogradage de la boîte de vitesse dans le cas ou la pédale d'accélérateur passe un point dur prédéterminé. Par ailleurs, ce premier module 31 intègre des valeurs de limitation en régime telles que le sous-régime, le sur-régime, des limitations spécifiques à la transmission ou encore des limitation liées à la sûreté de fonctionnement.

Une seconde étape consiste à transformer le rapport de vitesse en mode manuel avec commande impulsionnelle K_manuel en une consigne N_manuel. Cette transformation est effectuée par le second module qui multiplie la vitesse du véhicule automobile par le ratio associé au rapport de vitesse en mode manuel K_manuel délivré par le premier module 31. Ce ratio est déterminé à partir de tables cartographiées. Par ailleurs la consigne N_manuel délivrée par le second module 33 est limitée par deux consignes supérieure et inférieure qui représentent les limites acceptables du moteur thermique. En outre, pour ne pas générer de variations brutales du régime moteur lorsque le conducteur change de rapport de vitesse, la variation de la consigne N_manuel est limitée à des valeurs calibrées par l'utilisation d'un filtre de lissage intégré dans le second module 33. Ces valeurs peuvent par exemple dépendre du rapport de vitesse K_manuel délivré par le premier module 31, de la sportivité du conducteur ou des souhaits de ce dernier.

## Revendications

1. Procédé de commande d'une transmission automatisée d'un groupe motopropulseur pour véhicule automobile comprenant une étape d'élaboration d'une consigne (N_new) de régime de fonctionnement et de commande du groupe moto-propulseur de manière à atteindre la consigne de régime moteur, ladite consigne étant élaborée en fonction d'un couple aux roues adapté à la volonté du conducteur et de données d'entrées représentatives des caractéristiques du véhicule automobile, de la volonté du conducteur et de l'environnement du véhicule automobile, **caractérisé par le fait que** l'on adapte ladite consigne en fonction d'un mode de conduite sélectionné parmi au moins deux modes de conduite distincts qui comprennent un mode automatique et un mode manuel avec commande impulsionnelle, la génération d'une consigne de régime de fonctionnement et de commande du groupe moto-propulseur dans le cas du mode manuel avec commande impulsionnelle (N_manuel) consistant à :
- déterminer la consigne de rapport en mode manuel (K_manuel) avec commande impulsionnelle en fonction d'une première liste de paramètres d'entrée prédéterminés,
- traduire en consigne de régime de fonctionnement et de commande du groupe moto-propulseur (N_manuel) ladite consigne de rapport en consigne de régime moteur (K_manuel) en fonction d'une seconde liste de paramètres d'entrée prédéterminés, comprenant la consigne de rapport en mode manuel avec commande impulsionnelle (K_manuel), la valeur de la vitesse du véhicule automobile et l'activité du conducteur, ladite consigne de régime de fonctionnement et de commande du groupe moto-propulseur en mode manuel (N_manuel) avec commande impulsionnelle étant limitée à des valeurs calibrées par l'utilisation d'un filtre de lissage.

2. Procédé de commande selon la revendication 1, **caractérisé par le fait qu'**on sélectionne le mode manuel avec commande impulsionnelle en fonction de la valeur d'un signal de consigne d'un moyen de commande de vitesse du véhicule automobile après un traitement dudit signal de consigne.

3. Procédé de commande selon la revendication 1 ou 2, **caractérisé par le fait que** la première liste de paramètres d'entrée pour déterminer une consigne de rapport en mode manuel (K_manuel) avec commande impulsionnelle comprend : l'enfoncement de la pédale d'accélération du véhicule automobile et la position du moyen de commande de vitesse du véhicule automobile.

4. Procédé selon l'une quelconque des revendications 1 à 3, **caractérisé par le fait que** la consigne de régime de fonctionnement et de commande du groupe moto-propulseur en mode manuel avec commande impulsionnelle (N_manuel) est saturée par des consignes de régime moteur minimale et maximale.

5. Dispositif de commande d'une transmission automatisée d'un groupe motopropulseur pour véhicule automobile, apte à élaborer une consigne de régime de fonctionnement et de commande du groupe moto-propulseur de manière à atteindre la consigne de régime moteur, en fonction d'un couple aux roues adapté à la volonté du conducteur, **caractérisé en ce qu'**il comprend :
- un bloc d'entrée (1) délivrant des données d'entrée représentatives de la volonté du conducteur (8) et de l'environnement du véhicule automobile (9),
- un bloc de commande comprenant au moins deux modules respectivement adaptés à deux modes de conduite distincts, un mode automatique (12) et un mode manuel avec commande impulsionnelle (13), chacun des modules étant apte à élaborer une consigne régime de fonctionnement et de commande du groupe moto-propulseur de manière à atteindre la consigne de régime moteur en tenant compte des données d'entrée délivrées par le bloc d'entrée,
- un module de traitement (7) des signaux délivrés par le moyen de commande de vitesse du véhicule automobile (MCV),
- un module de sélection (5) recevant des signaux provenant dudit module de traitement (7) des signaux du moyen de commande de vitesse du véhicule automobile et étant apte à délivrer un signal de sélection (*mode*) d'un module de mode de conduite en fonction de ces signaux,
et **en ce que** le module (13) correspondant à une conduite en mode manuel avec commande impulsionnelle comporte :
- un bloc de détermination (31) d'une consigne de rapport manuel avec commande impulsionnelle (32),
- un bloc de traduction (33) de ladite consigne de rapport manuel avec commande impulsionnelle (K_manuel) en consigne de régime de fonctionnement et de commande du groupe moto-propulseur (N_manuel), ledit bloc de traduction comprenant un bloc de lissage apte à limiter la consigne de régime de fonctionnement et de commande du groupe moto-propulseur (N_manuel) à des valeurs calibrées.

## Claims

1. Method for controlling an automatic transmission of a power train for a motor vehicle comprising a step of providing an operating speed and control instruction (N_new) for the power train in order to attain the set engine speed, said instruction being generated as a function of a torque applied to the wheels adapted to the driver's will and of input data representative of the characteristics of the motor vehicle, the driver's will and the environment of the motor vehicle, **characterized in that** said instruction is adapted according to one driving mode selected from at least two distinct driving modes which include an automatic mode and a manual mode with pulse control, the generation of an operating speed and control instruction (N_manual) for the power train in the case of the manual mode with pulse control consisting in:
- determining the gear ratio instruction in manual mode with pulse control (K_manual) as a function of a first list of predetermined input parameters,
- converting into an operating speed and control instruction of the power train (N_manual) said gear ratio instruction into an engine speed instruction (K_manual) according to a second list of predetermined input parameters, comprising the gear ratio instruction in manual mode with pulse control (K_manual), the value of the speed of the motor vehicle and the activity of the driver, said operating speed and control instruction for the power train in manual mode (N_manual) with pulse control being limited to values calibrated by the use of a smoothing filter.

2. Control method according to Claim 1, **characterized in that** the manual mode with pulse control is selected as a function of the value of an instruction signal from a gear control means of the motor vehicle after a processing of said instruction signal.

3. Control method according to Claim 1 or 2, **characterized in that** the first list of input parameters for determining a gear ratio instruction in manual mode with pulse control (K_manual) comprises: the pushing down of the accelerator pedal of the motor vehicle and the position of the gear control means of the motor vehicle.

4. Method according to any one of Claims 1 to 3, **characterized in that** the operating speed and control instruction of the power train in manual mode with pulse control (N_manual) is saturated by minimum and maximum engine speed instructions.

5. Control device for an automatic transmission of a power train for a motor vehicle, capable of generating an operating speed and control instruction for the power train in order to attain the set engine speed, as a function of a torque applied to the wheels adapted to the driver's will, **characterized in that** it comprises:
- an input unit (1) providing input data representative of the driver's will (8) and of the environment of the motor vehicle (9),
- a control unit comprising at least two modules respectively adapted to two distinct driving modes, an automatic mode (12) and a manual mode with pulse control (13), each of the modules being capable of generating an operating speed and control instruction for the power train in order to attain the set engine speed, taking account of the input data supplied by the input unit,
- a module (7) for processing the signals supplied by the gear control means of the motor vehicle (MCV),
- a selection module (5) receiving signals coming from said module (7) for processing the signals from the gear control means of the motor vehicle and being capable of providing a signal (*mode*) for selecting a driving mode module as a function of these signals,
and **in that** the module (13) corresponding to driving in manual mode with pulse control comprises:
- a unit (31) for determining a manual gear ratio with pulse control instruction (32),
- a unit (33) for converting said manual gear ratio with pulse control instruction (K_manual) into an operating speed and control instruction for the power train (N_manual), said converting unit comprising a smoothing unit capable of limiting the operating speed and control instruction of the power train (N_manual) to calibrated values.

## Patentansprüche

1. Steuerverfahren für ein Automatikgetriebe eines Kraftfahrzeug-Antriebsstrangs, mit einem Schritt des Entwickelns eines Sollwertes (N_new) für die Betriebsdrehzahl und die Steuerung des Antriebsstrangs in der Weise, dass der Motordrehzahl-Sollwert erreicht wird, wobei der Sollwert in Abhängigkeit von einem an den Fahrerwunsch angepassten Drehmoment an die Räder und von Eingangsdaten, die für Eigenschaften des Kraftfahrzeugs, den Fahrerwunsch und die Umgebung des Kraftfahrzeugs repräsentativ sind, entwickelt wird, **dadurch gekennzeichnet, dass** der Sollwert in Abhängigkeit von einer ausgewählten Fahrbetriebsart unter wenigstens zwei verschiedenen Fahrbetriebsarten angepasst wird, die eine automatische Fahrbetriebsart und eine manuelle Fahrbetriebsart mit Impulssteuerung enthalten, wobei die Erzeugung eines Sollwerts für die Betriebsdrehzahl und die Steuerung des Antriebsstrangs im Fall der manuellen Betriebsart mit Impulssteuerung (N_manuel) darin besteht:
- den Übersetzungsverhältnis-Sollwert in der manuellen Betriebsart (K_manuel) mit Impulssteuerung in Abhängigkeit von einer ersten Liste vorgegebener Eingangsparameter zu bestimmen,
- den Übersetzungsverhältnis-Sollwert in den Motordrehzahl-Sollwert (K_manuel) in Abhängigkeit von einer zweiten Liste vorgegebener Eingangsparameter in den Sollwert für die Betriebsdrehzahl und die Steuerung des Antriebsstrangs (N_manuel) zu überführen, wobei die zweite Liste den Übersetzungsverhältnis-Sollwert für manuelle Betriebsart mit Impulssteuerung (K_manuel), den Wert der Geschwindigkeit des Kraftfahrzeugs und die Aktivität des Fahrers enthält, wobei der Sollwert für die Betriebsdrehzahl und die Steuerung des Antriebsstrangs (N_manuel) in der manuellen Betriebsart mit Impulssteuerung auf Werte begrenzt ist, die durch die Verwendung eines Glättungsfilters kalibriert sind.

2. Steuerverfahren nach Anspruch 1, **dadurch gekennzeichnet, dass** die manuelle Betriebsart mit Impulssteuerung in Abhängigkeit vom Wert eines Stellsignals eines Mittels zum Steuern der Geschwindigkeit des Kraftfahrzeugs nach einer Verarbeitung des Stellsignals ausgewählt wird.

3. Steuerverfahren nach Anspruch 1 oder 2, **dadurch gekennzeichnet, dass** die erste Liste von Eingangsparametern zum Bestimmen eines Übersetzungsverhältnis-Sollwerts in der manuellen Betriebsart (K_manuel) mit Impulssteuerung enthält: die Niederdrückung des Fahrpedals des Kraftfahrzeugs und die Position des Steuermittels für die Geschwindigkeit des Kraftfahrzeugs.

4. Verfahren nach einem der Ansprüche 1 bis 3, **dadurch gekennzeichnet, dass** der Sollwert für die Betriebsdrehzahl und die Steuerung des Antriebsstrangs in der manuellen Betriebsart mit Impulssteuerung (N_manuel) durch Sollwerte für minimale und maximale Motordrehzahl gesättigt ist.

5. Steuervorrichtung für ein Automatikgetriebe eines Kraftfahrzeug-Antriebsstrangs, die einen Sollwert für die Betriebsdrehzahl und die Steuerung des Antriebsstrangs in der Weise, dass der Motordrehzahl-Sollwert erreicht wird, in Abhängigkeit von einem an den Fahrerwunsch angepassten Drehmoment an die Räder entwickelt wird, **dadurch gekennzeichnet, dass** sie enthält:
- einen Eingangsblock (1), der Eingangsdaten liefert, die den Fahrerwunsch (8) und die Umgebung des Kraftfahrzeugs (9) repräsentieren,
- einen Steuerblock, der wenigstens zwei Module enthält, die an zwei verschiedene Fahrbetriebsarten angepasst sind, nämlich eine automatische Betriebsart (12) und eine manuelle Betriebsart mit Impulssteuerung (13), wobei jedes der Module dazu ausgelegt ist, einen Sollwert für die Betriebsdrehzahl und die Steuerung des Antriebsstrangs in der Weise, dass der Motordrehzahl-Sollwert erreicht wird, unter Berücksichtigung der von dem Eingangsblock gelieferten Eingangsdaten zu entwickeln,
- ein Modul (7) für die Verarbeitung von Signalen, die von dem Mittel zum Steuern der Geschwindigkeit des Kraftfahrzeugs (MCV) geliefert werden,
- ein Auswahlmodul (5), das Signale empfängt, die von dem Modul (7) für die Verarbeitung der Signale des Mittels für die Steuerung der Geschwindigkeit des Kraftfahrzeugs stammen, und ein Auswahlsignal (*mode*) eines Fahrbetriebsart-Moduls in Abhängigkeit von diesen Signalen liefern kann,
und dass das Modul (13), das einem Fahren mit manueller Betriebsart mit Impulssteuerung entspricht, enthält:
- einen Block (31) zum Bestimmen eines Übersetzungsverhältnis-Sollwerts bei manueller Betriebsart mit Impulssteuerung (32),
- einen Block (33) zum Überführen des Übersetzungsverhältnis-Sollwerts bei manueller Betriebsart mit Impulssteuerung (K_manuel) in einen Sollwert für die Betriebsdrehzahl und die Steuerung des Antriebsstrangs (N_manuel), wobei der Überführungsblock einen Glättungsblock enthält, der den Sollwert für die Betriebsdrehzahl und die Steuerung des Antriebsstrangs (N_manuel) auf kalibrierte Werte begrenzt.
